Europäisches Patentamt

European Patent Office

Office européen des brevets

(11) Veröffentlichungsnummer: **0 075 196**
**B1**

(12) **EUROPÄISCHE PATENTSCHRIFT**

(45) Veröffentlichungstag der Patentschrift: 27.05.87

(51) Int. Cl.⁴: **G 05 B 19/42**

(21) Anmeldenummer: 82108276.5

(22) Anmeldetag: 08.09.82

(54) Positionssteuerung der Bohrspindel einer Radialbohrmaschine.

(30) Priorität: 14.09.81 HU 264781

(43) Veröffentlichungstag der Anmeldung:
30.03.83 Patentblatt 83/13

(45) Bekanntmachung des Hinweises auf die
Patenterteilung:
27.05.87 Patentblatt 87/22

(84) Benannte Vertragsstaaten:
AT BE CH DE FR GB IT LI LU NL SE

(56) Entgegenhaltungen:
DE-A-2 740 507
GB-A-2 022 869
US-A-3 633 011
US-A-4 043 700
US-A-4 208 675

Zeitschrift "Steuerungstechnik", 6 (1973), Nr. 2,
S. 28-32

(73) Patentinhaber: Csepel Müvek
Szerszámgépgyára
Pf. 91
H-1751 Budapest (HU)

(72) Erfinder: Joo, István, Dipl.-Ing.
S. u. 17
H-1088 Brody (HU)
Erfinder: Sárosi, Jozsef
Budafoki u. 10
H-1211 Budapest (HU)
Erfinder: Schütz, Lajos, Dipl.-Ing.
Reggel u. 50
H-1214 Budapest (HU)
Erfinder: Szebenyi, Otto, Dipl.-Ing.
Mártirok u. 1kp. 2. ép.
H-1205 Budapest (HU)
Erfinder: Taál, Jànos, Dipl.-Ing.
Kolozsvári u. 17b
H-1212 Budapest (HU)
Erfinder: Szabo, Sándor Péter, Dipl.-Ing.
Baross u. 48-50
H-1201 Budapest (HU)

(74) Vertreter: Patentanwälte Viering & Jentschura
Steinsdorfstrasse 6
D-8000 München 22 (DE)

# 0 075 196

**Beschreibung**

Die Erfindung betrifft ein Verfahren und eine Schaltungsanordnung zur Positionssteuerung der Bohrspindelachse einer Radialbohrmaschine.

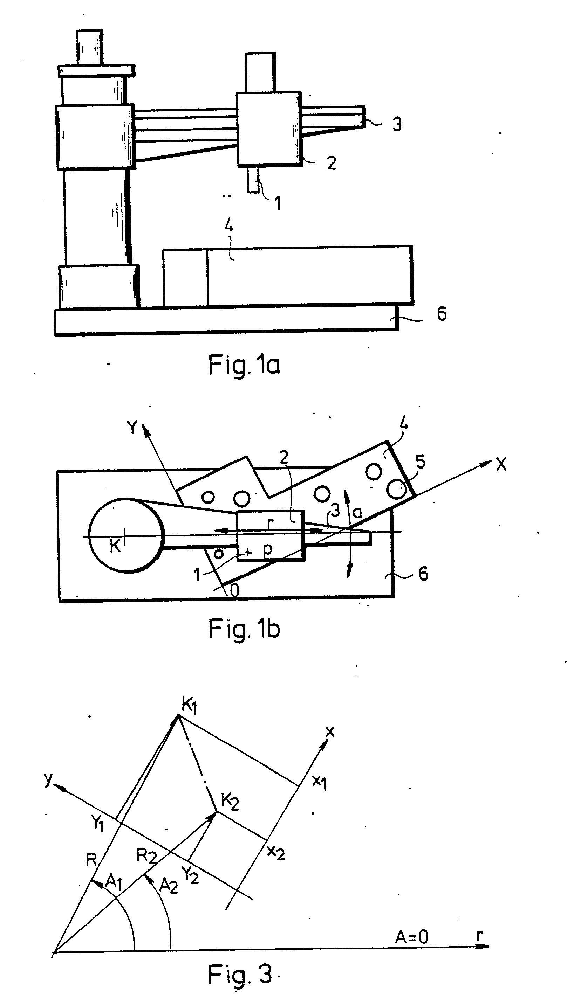

Eine Radialbohrmaschine, auch Auslegerbohrmaschine genannt, weist einen Maschinenkörper auf, der (Fig. 1/a) aus der Grundplatte 6 und einem auf dieser befestigten Ständer besteht, über den die Säule mit dem Ausleger 3 gestülpt ist, der ggf. bis zu 360° verschwenkt werden kann. Entlang des Auslegers 3 ist auf Schienen der Bohrschlitten 2 mit der Bohrspindel 1 verfahrbar.

Die Einstellung der Bearbeitungsposition auf Radialbohrmaschinen erfolgt (Fig. 1/b) durch Positionieren der Bohrspindel 1 durch die Bewegung r des Bohrschlittens 2 auf dem Ausleger 3 und durch das Verschwenken a des Auslegers 3, ähnlich wie in einem Polarkoordinatensystem. Dagegen werden die Position und die Toleranz der Mittelpunkte der zu bearbeitenden Bohrungen 5 des Werkstückes 4 auf der Werkzeichnung in kartesischen X- und Y-Koordinaten angegeben. Das Positionieren erfolgt meistens durch Anreißen der einzelnen Werkstücke oder bei größeren Serien mit Hilfe von Vorrichtungen. Die erste Methode ist recht langwierig und ungenau, die zweite außerordentlich kostspielig und aufwendig.

Für numerisch gesteuerte Fräsmaschinen ist es hingegen bekannt (De-Z "Steuerungstechnik" 6 (1973), Nr. 2, S. 28—32), vorgegebene werkstückbezogene kartesische Koordinaten in ein maschinenfestes Polarkoordinatensystem zu transformieren. Ferner ist eine Programmsteuerung eines Manipulators bekannt (DE—A—27 40 507), bei dem die Bewegungskoordinaten des Manipulatorarmes Polarkoordinaten sind und das Werkstück z.B. auf einem Förderband während der Bearbeitung relativ zu dem Manipulator bewegt wird. Dieser muß daher der Werkstückbewegung folgen. Zum Anlernen der dabei anzusteuernden Positionskoordinaten wird der Manipulatorarm bei stillstehendem Werkstück zu den einzelnen Arbeitspositionen geführt, wobei die dabei gemessenen Polarkoordinaten in kartesische Koordinatenwerte umgerechnet werden, denen die Bewegungskremente der zu bearbeitenden Werkstücke aufgrund der Bewegungsgeschwindigkeit hinzugerechnet werden. Die so erhaltenen, auch die Geschwindigkeit des Förderbandes berücksichtigenden Positionskoordinaten werden sodann in die zugeordneten, maschinenfesten Polarkoordinaten des Manipulatorarmes zurücktransformiert und als Steuerdaten gespeichert.

Eine bekannte Positionssteuerung der Bohrspindelachse einer Radialbohrmaschine entsprechend des einleitenden Teils des Patentanspruchs 1 (US—A—4043700) erfolgt mit Hilfe einer gesonderten, in einem maschinenfesten kartesischen Koordinatensystem gesteuerten Kreuzschlitten-Stellvorrichtung, die an einer zur Bohrspindelachse koaxialien Positionierachse angreift. Damit hierbei präzise Positionseinstellungen erreichbar sind, müssen die Kreuzschlitten mit ihren beweglichen und unbeweglichen Bauteilen sowie die Führung an der Positionierachse nicht nur hochpräzise ausgeführt sein, sondern auch in ihrer Lage relativ zu den Bewegungsführungen der Radialbohrmaschine, d.i. der Drehachse des Auslegers, der Führung des Bohrschlittens am Ausleger und dessen Vertikalführung, hochgenau ausgerichtet sein.

Zu berücksichtigen ist überdies, daß die Werkstücke, die auf Radialbohrmaschinen gebohrt werden, im allgemeinen groß und sperrig sind und daher nur mühevoll derart auf der Grundplatte der Radialbohrmaschine eingespannt werden können, daß sich das Werkstück nach Lage und Ausrichtung stets in einer bestimmten, auf die Radialbohrmaschine bezogenen Einspannposition befindet.

Durch die Erfindung wird die Aufgabe gelöst, eine Positionssteuerung der Bohrspindel einer Radialbohrmaschine derart zu schaffen, daß die Arbeitspositionen der Bohrspindel in Abhängigkeit von den vorgegebenen X,Y-Koordinaten der Bohrungsmittelpunkte auf dem in die Maschine eingespannten Werkstück unabhänig von dessen Ist-Position und Ist-Ausrichtung in der Maschine steuerbar sind.

Dies wird gemäß der Erfindung durch die Merkmale aus dem Anspruch 1 bzw. 3 erreicht. Bevorzugte Weiterbildungen der Erfindung sind in den Ansprüchen 2 bzw. 4 angegeben.

Das Verfahren gemäß der Erfindung und die dazu gehörende Schaltungsanordnung basieren auf einer Transformationsverknüpfung zwischen einem maschinenbezogenen Polarkoordinatensystem der Radialbohrmaschine und dem werkstückbezogenen kartesischen Koordinatensystem, auf das die vorgegebenen X,Y-Koordinaten der Mittelpunkte der im Werkstück auszubildenden Bohrungen bezogen sind, in Kenntnis der Relativ-Position der beiden Koordinatensystem. Durch programmierte Angabe der kartesischen Koordinaten der Werkzeichnung für die Bohrungsmittelpunkte und deren Toleranzen werden die Werte von der Positioniersteuerung ins Koordinatensystem der Radialbohrmaschine transformiert, so daß dadurch das schnelle einfache Positionieren ermöglich ist. Mit reversierter Transformation können durch die Radialbohrmaschine aufgenommene Koordinaten ins Koordinatensystem des Werkstückes transformiert und als Programm gespeichert werden.

Das Verfahren gemäß der Erfindung und die Schaltungsanordnung werden mit Bezugnahme auf die Fig. 1/a, 1/b, 2, 3 und 4 im Folgenden ausführlich beschrieben.

Die Bezugzeichen in den Figuren der Zeichnung haben folgende Bedeutung:

| Fig. 1 | | |
|---|---|---|
| | 1=Bohrspindel | 5=Bohrungen |
| | 2=Bohrschlitten | 6=Grundplatte |
| | 3=Ausleger | P=Bohrspindel-Mittelpunkt |
| | 4=Werkstück | K=Schwenkachse des Auslegers |

Fig. 2
K = Schwenkachse des Auslegers, Pol des Polarkoordinatensystems der Radialbohrmaschine R=0
P = Mittelpunkt der Bohrspindel
$r_p$ = Vom Bohrspindelmittelpunkt beschriebene Gerade während der Bewegung des Bohrschlittens auf dem Ausleger
$r_k$ = Eine die Schwenkachse des Auslegers schneidende und mit $r_p$ parallele Gerade
$K_p$ = senkrechter Abstand zwischen $r_k$ und $r_p$
r = Radiuskoordinate des Polarkoordinatensystems der Radialbohrmaschine
a = Winkelkoordinate des Polarkoordinatensystems der Radialbohrmaschine
$R_p$ = Radiuskoordinatenwert des Bohrspindelmittelpunktes
$A_p$ = Winkelkoordinatenwert des Bohrspindelmittelpunktes
$P_k$ = Orthogonalprojektion des Bohrspindelmittelpunktes auf die Gerade $r_k$
R = Radiuskoordinatenwert des Punktes $P_k$
A = Winkelkoordinatenwert des Punktes $P_k$
O = Ursprung des kartesischen Koordinatensystems des Werkstücks
$R_0$ = Radiuskoordinatenwert des Ursprungs
$A_0$ = Winkelkoordinatenwert des Urpsungs
$R_{xy}$ = Länge des vom Ursprung zum Bohrspindelmittelpunkt gerichteten Vektors
$A_{xy}$ = Winkel des vom Ursprung zum Bohrspindelmittelpunkt gerichteten Vektors zur X-Achse
$A_x$ = Winkel der X-Achse zur Geraden A=0
x = Ordinate des kartesischen Koordinatensystems des Werkstücks
y = Abszisse des kartesischen Koordinatensystems des Werkstücks
X = x-Koordinatenwert des Bohrspindelmittelpunktes
Y = y-Koordinatenwert des Bohrspindelmittelpunktes
$X_{RA}$ = Orthogonalprojektion des vom Ursprung zum Bohrspindelmittelpunkt gerichteten Vektors auf die Gerade A=0
$Y_{RA}$ = Orthogonalprojektion des vom Ursprung zum Bohrspindelmittelpunkt gerichteten Vektors auf die Gerade A=π/2

Fig. 3
x = Ordinate des kartesischen Koordinatensystems des Werkstücks.
y = Abszisse des kartesischen Koordinatensystems des Werkstücks
$K_1$ = Koordinatensystem-Bestimmungspunkt
$K_2$ = Koordinatensystem-Bestimmungspunkt
$X_1$ = x-Koordinatenwert des Punktes $K_1$
$x_2$ = x-Koordinatenwert des Punktes $K_2$
$R_1$ = Radius-Koordinatenwert des Punktes $K_1$
$R_2$ = Radius-Koordinatenwert des Punktes $K_2$
$A_1$ = Winkel-Koordinatenwert des Punktes $K_1$
$A_2$ = Winkel-Koordinatenwert des Punktes $K_2$
$Y_1$ = y-Koordinatenwert des Punktes $K_1$
$Y_2$ = y-Koordinatenwert des Punktes $K_2$

Fig. 4
10=Arithmetik- und Steuerschaltkreis
11=Unterbrechungs-Verarbeitungsschaltkreis
12=Taktgeber-Schaltkreis
13=Prüf- und Überwachungsschaltkreis
14=Adressen-Signale
15=Daten-Signale
16=Steuer-Signale
17=Unterbrechungsforderungssignale
18=Takt-Signale
19=Prüf-Signale
20=Arithmetik- und Steuerprogramm-Speicherschaltkreis
25=Bearbeitungsprogramm-Speicherschaltkreis
30=Tastatur-Verarbeitungsschaltkreis
31=Tastatur-Verarbeitungs-Signale
32=Tastatur
35=Anzeige-Verarbeitungsschaltkreis
36=Anzeige-Verarbeitungssignale
37=Anzeige
40=Meßsystem-Verarbeitungsschaltkreis
41=Impulsgeber-Signale
42=Impulsgeber

**0 075 196**

43=Maschinenreferenzpunkt-Signale
45=Analog-Servo-Ausgangsschaltkreis
46=Analog-Servo-Ausgangssignale
50=Maschinenzustand-Eingangsschaltkreis
51=Maschinenzustand-Eingangssignale
55=Maschinenzustand-Ausgangsschaltkreis
56=Maschinenzustand-Ausgangssignale
60=Bearbeitungsprogramm-Eingabeschaltkreis
61=Bearbeitungsprogramm-Eingabesignale
65=Bearbeitungsprogramm-Ausgabeschaltkreis
66=Bearbeitungsprogramm-Ausgabesignale

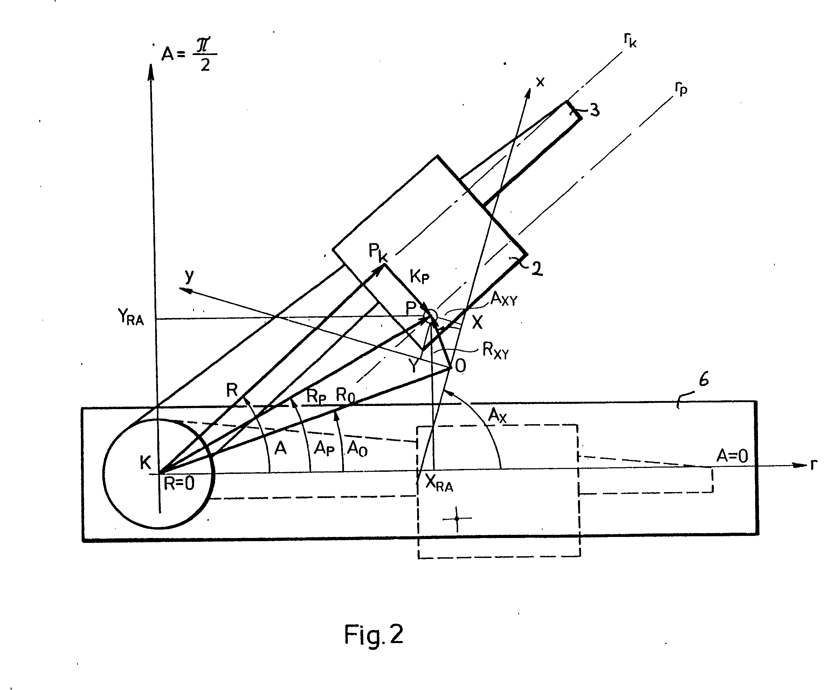

Die Koordinatensysteme der Radialbohrmaschine und des Werkstücks bzw. die gegenseitige Verknüpfung sind in Fig. 2 gezeigt. Der Mittelpunkt P der Bohrspindel bewegt sich durch Verstellen des Bohrschlittens 2 an dem Ausleger 3 entlang einer Geraden $r_p$, die von der die Schwenkachse K des Auslegers 3 schneidenden parallelen Geraden $r_k$ in einem Abstand $K_p$ liegt, und schwenkt um K entlang des Bogens a. Auf der Radialbohrmaschine sind die Polarkoordinaten der Orthogonalprojektion $P_k$ des Bohrspindelmittelpunktes P auf die Gerade $r_k$ der Radiusvektor R und der Polarwinkel A. A und R werden direkt gemessen und aus diesen werden der Radiusvektor $R_p$ bzw. der Polarwinkel $A_p$ des Bohrspindelmittelpunktes P auf Grund der folgenden Zusammenhänge berechnet:

/1/ $$R_p=\sqrt{R^2+K_p^2}$$

/2/ $$A_p=A-\arctg\frac{K_p}{R}$$

wobei der Wert r vom Schwenkmittelpunkt K des Auslegers 3, und der Wert A von der Grundposition des Auslegers 3, d.i. der die Schwenkachse K senkrecht schneidenden Bezugsgeraden A=0 aus gemessen werden. Der Ausleger ist in der Grundposition, wenn die Gerade $r_k$ mit den Spann-Nuten der Grundplatte 6 parallel verläuft und mit der Bezugsgeraden A=0 zusammenfällt.

Der Ursprung 0 des kartesischen Koordinatensystems des Werkstücks 4 wird im Koordinatensystem der Radialbohrmaschine mit den Werten $R_0$ und $A_0$, und die Position mit dem Winkel $A_x$ der Achse X angegeben. Die kartesischen Koordinaten X und Y des Bohrspindelmittelpunktes P im Koordinatensystem des Werkstücks können mit diesen Kenntnissen aus den Polarkoordinatenwerten $R_p$ und $A_p$ gemäß den Beziehungen /3/, /4/, /5/ und /6/ berechnet werden:

/3/ $$R_{xy}=\sqrt{(R_p\cdot\cos A_p-R_0\cdot\cos A_0)^2+(R_p\cdot\sin A_p-R_0\cdot\sin A_0)^2}$$

/4/ $$A_{xy}=\arctg\frac{R_p\cdot\sin A_p-R_0\cdot\sin A_0}{R_p\cdot\cos A_p-R_0\cdot\cos A_0}-A_x$$

/5/ $$X=R_{xy}\cdot\cos A_{xy}$$

/6/ $$Y=R_{xy}\cdot\sin A_{xy}$$

Als umgekehrte Transformation werden aus den kartesischen Koordinaten X und Y die Polarkoordinatenwerte $R_p$ und $A_p$ gemäß den Beziehungen /7/, /8/, /9/ und /10/ berechnet:

/7/ $$X_{RA}=R_0\cdot\cos A_0+\sqrt{X^2+Y^2}\cdot\cos(A_x+\arctg\frac{Y}{X})$$

/8/ $$Y_{RA}=R_0\cdot\sin A_0+\sqrt{X^2+Y^2}\cdot\sin(A_x+\arctg\frac{Y}{X})$$

/9/ $$R_p=\sqrt{X_{RA}^2+Y_{RA}^2}$$

/10/ $$A_p=\arctg\frac{Y_{RA}}{X_{RA}}$$

4

Aus den Werten $R_p$ und $A_p$ werden die Werte R und A gemäß den Beziehungen /11/ und /12/ berechnet:

/11/
$$R=\sqrt{R_p^2-K_p^2}$$

/12/
$$A=A_p+\text{arctg}\frac{K_p}{R}$$

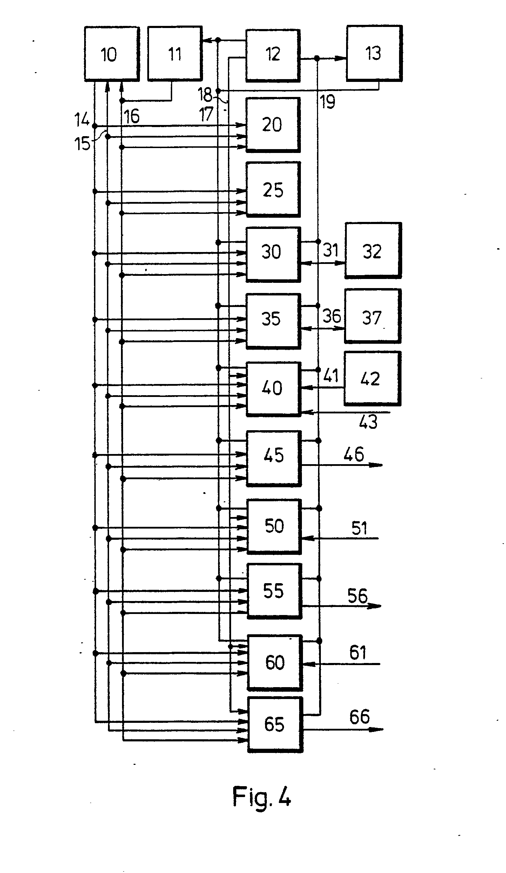

Das Verhältnis dieser Parameter erfolgt durch Angabe bzw. Messung der Koordinatensystem-Bestimmungspunkte $K_1$ und $K_2$ mit den zusammengehörigen kartesischen und polaren Koordinatenwerten (Fig. 3).

/13/
$$A_x=\text{arctg}\frac{R_2 . \sin A_2-R_1 . \sin A_1}{R_2 . \cos A_2-R_1 . \cos A_1}-\text{arctg}\frac{Y_2-Y_1}{X_2-X_1}$$

/14/
$$X_0=R_1 . \cos A_1-\sqrt{X_1^2+Y_1^2} . \cos(A_x+\text{arctg}\frac{Y_1}{X_1})$$

/15/
$$Y_0=R_1 . \sin A_1-\sqrt{X_1^2+Y_1^2} . \sin(A_x+\text{arctg}\frac{Y_1}{X_1})$$

/16/
$$R_0=\sqrt{X_0^2+Y_0^2}$$

/17/
$$A_0=\text{arctg}\frac{Y_0}{X_0}$$

Da die Zuordnung der Werte $(R_1, A_1)$, $(X_1, Y_1)$ und $(R_2, A_2)$, $(X_2, Y_2)$ überbestimmt ist, werden als Überprüfung die Werte $(R_0, A_0)$ aus den zusammengehörigen Werten $(R_2, A_2)$, $(X_2, Y_2)$ mit Hilfe der Beziehungen /18/ und /19/ berechnet:

/18/
$$X_0=R_2 . \cos A_2-\sqrt{X_2^2+Y_2^2} . \cos(A_x+\text{arctg}\frac{Y_2}{X_2})$$

/19/
$$Y_0=R_2 . \sin A_2-\sqrt{X_2^2+Y_2^2} . \sin(A_x+\text{arctg}\frac{Y_2}{X_2})$$

Bemerkung: Die Auslegung der Quotienten von arctg-Funktionen erfolgt mit Berücksichtigung der Vorzeichen von Zähler und Nenner.

Bei dem erfindungsgemäßen Verfahren zur Positionssteuerung von Radialbohrmaschinen, bei dem die jeweilige Position des Bohrspindelmittelpunktes P entsprechend seiner Verstellung mittels des Bohrschlittens 2 entlang des Auslegers 3 durch seine Radiuskoordinaten R, und entsprechend des Verschwenkens des Auslegers 3 in seinen Winkelkoordinaten A des maschinenbezogenen Polarkoordinatensystems bestimmbar ist, werden daher zum Positionieren der Bohrspindelachse auf die mit X, Y angegebenen Bohrungsmittelpunkte 5 im werkstückbezogenen kartesischen Koordinatensystem x, y des Werkstückes 4 die folgenden Schritte durchgeführt:

a) Messen der Orthogonalprojektion $P_k$ des Bohrspindelmittelpunktes P auf de Gerade $r_k$, die mit der Geraden $r_p$ parallel läuft, wobei die Gerade $r_p$ durch den Verstellweg des Bohrschlittens 2 bzw. des Bohrspindelmittelpunktes P auf dem Ausleger 3 bestimmt ist, und die Gerade $r_k$ die Schwenkachse K des Auslegers 3 schneidet, sowie Messen des Radiuskoordinatenwertes R von der Auslegerschwenkachse K und des Winkelkoordinatenwertes A, gemessen von der Bezugsgeraden A=0 aus.

b) Berechnung des Radiuskoordinatenwertes $R_p$ und des Winkelkoordinatenwertes $A_p$ anhand des gemessenen Radiuskoordinatenwertes R und des Winkelkoordinatenwertes A in Kenntnis des Abstandes $K_p$ zwischen den parallelen Geraden $r_k$ und $r_p$ mit Hilfe der Beziehungen /1/ und /2/;

c) Aufnahme—mit genauer Positionierung—der als erste beiden Punkte des Bearbeitungsprogramms angegebenen Koordinatensystem-Bestimmungspunkte $K_1$, $K_2$ und dadurch der im kartesischen Koordinatensystem x, y des Werkstücks vorgegebenen, und der im Polarkoordinatensystem r, a der Radialbohrmaschine gemessenen, einander zugeordneten Werte $/X_1, Y_1, R_1, A_1$ bzw. $X_2, Y_2, R_2, A_2/$.

d) Berechnung der Parameter, die das Verhältnis des Polarkoordinatensystems r, a der Radialbohrmaschine und des kartesischen Koordinatensystems des Werkstücks x, y bestimmen, d.h. des

Radiuskoordinatenwertes $R_0$ und Winkelkoordinatenwertes $A_0$ des Ursprungs 0 des kartesischen Koordinatensystems x, y des Werkstücks im Polarkoordinatensystem r, a der Radialbohrmaschine, bzw. des Winkelkoordinatenwertes Ax der x-Achse zur Geraden A=0, auf Grund der Beziehungen /13/, /14/, /15/, /16/ und /17/.

e) Prüfen der Genauigkeit der Aufnahme der Koordinatensystem-Bestimmungspunkte /$K_1$, $K_2$/ mit den Bezeihungen /18/ und /19/;

f) Berechnung der im kartesischen Koordinatensystem x, y des Werkstücks angegebenen Koordinatenwerte X, Y der Bohrungsmittelpunkt 5 der auszubildenden Bohrungen im Polarkoordinatensystem r, a der Radialbohrmaschine als Polarkoordinatenwerte R, A aufgrund der Beziehungen /8/, /9/, /10/, /11/ und /12/;

g) Positionieren des Bohrspindelmittelpunktes P durch Verschwenken des Auslegers 5 auf den berechnten Winkel-Koordinatenwert A und durch Verstellen des Bohrschlittens 2 auf dem Ausleger 3 auf den Radius-Koordinatenwert R und Durchführen des Bohrens.

h) Zum Anlernen neuer Bohrungsmittelpunkte wird der Bohrspindelmittelpunkt P auf· de anzulernenden Bohrungsmittelpunkte 5 des Werstücks 5 positioniert, und durch die im Polarkoordinatensystem r, a der Radialbohrmaschine gemessenen Polarkoordinatenwerte R, A, und in Kenntnis der Parameter $R_0$, $A_0$, $A_x$, die das Verhältnis des kartesischen Koordinatensystems x, y des Werkstückes und des Polar-Koordinatensystems r, a der Radialbohrmaschine bestimmen, werden die zum kartesischen Koordinatensystem x, y des Werkstücks gehörenden Koordinatenwerte X, Y aufgrund der Bezeihungen /1/, /2/, /3/, /4/, /5/ und /6/ berechnet.

Die Schaltungsanordnung gemäß der Erfindung ist in Fig. 4 dargestellt und ihre einzelnen Funktionen werden mittels Fig. 4 erläutert.

Die erfindungsgemäße Schaltungsanordnung zur Positioniersteuerung von Radialbohrmaschinen mittels miteinander verknüpfter elektronischer Schaltkreise entsprechend Fig. 4 ist aus den folgenden Schaltkreisen aufgebaut:

a) Der Arithmetik- und Steuerschaltkreis 10 ist für den gegenseitigen Datenverkehr verknüpft mit

— dem Arithmetik- und Steuerprogramm Speicherschaltkreis 20,
— dem Bearbeitungsprogramm Speicherschaltkreis 25,
— dem Tastatur-Verarbeitungsschaltkreis 30, der in einer gegenseitigen Verbindung mit der Tastatur 32 steht,
— dem Anzeige-Verarbeitungsschaltkreis 35, der in einer gegenseitigen Verbindung mit der Anzeigeeinrichtung 37 steht,
— mit dem Meßsystem-Verarbeitungsschaltkreis 40, an dem als Eingänge die Ausgänge der Impulsgeber 42 und die Maschinenreferenzpunkte 43 angeschlossen sind,
— dem Analog-Servo-Ausgangsschaltkreis 45, der über Analog-Servo-Ausgänge 46 verfügt,
— dem Maschinenzustands-Eingangsschaltkreis 50, der über die Maschinenzustands-Eingänge 51 verfügt,
— dem Maschinenzustands-Ausgangsschaltkreis 55, der über die Maschinenzustands-Ausgänge 56 verfügt,
— dem Bearbeitungsprogramm Eingabeschaltkreis 60, der über die Bearbeitungsprogramm-Eingabeeingänge 61 verfügt, und
— dem Bearbeitungsprogramm-Ausgabeschaltkreis 65, der über die Bearbeitungsprogramm-Ausgabeausgänge 66 verfügt;

b) Der Ausgang des Unterbrechungs-Verarbeitungsschaltkreises 11 ist an den Eingang des Arithmetik- und Steuerschaltkreises 10 angeschlossen und an seinen Eingang sind angeschlossen:

— der Taktgeber-Schaltkreis 12
— der Prüf- und Überwachungsschaltkreis 13
— der Tastatur-Verarbeitungsschaltkreis 30
— der Anzeige-Verarbeitungsschaltkreis 35
— der Meßsystem-Verarbeitungsschaltkreis 40
— der Analog-Servo-Ausgangsschaltkreis 45
— der Maschinenzustands-Eingangsschaltkreis 50 der Maschinenzustands-Ausgangsschaltkreis 55 und
— die Ausgänge des Bearbeitungsprogramm-Eingabeschaltkreises 60;

c) An die Taktausgänge 18 des Taktgeber-Schaltkreises 12 sind angechlossen:

— der Prüf- und Überwachungsschaltkreis 13
— der Meßsystem-Verarbeitungsschaltkreis 40
— der Maschinenzustands-Eingangsschaltkreis 50
— der Bearbeitungsprogramm-Eingabeschaltkreis 60 und
— die Eingänge des Bearbeitungsprogramm-Ausgabeschaltkreises 65;

d) An den Prüfeingängen 19 des Prüf- und Überwachungsschaltkreises 13 sind angeschlossen:

— der Tastatur-Verarbeitungsschaltkreis 30
— der Anzeige-Verarbeitungsschaltkreis 35
— der Meßsystem-Verarbeitungsschaltkreis 40
— der Analog-Servo-Ausgangsschaltkreis 45
— der Maschinenzustands-Eingangsschaltkreis 50
— der Maschinenzustands-Ausgangsschaltkreis 55
— der Bearbeitungsprogramm-Eingabeschaltkreis 60 und
— die Ausgänge des Bearbeitungsprogramm-Ausgabeschaltkreises 65.

Die Funktionssteuerung und Abstimmung der einzelnen Funktionsgruppen werden durch den Arithmetik- und Steuerschaltkreis 10 bestimmt aufgrund des Inhalts des Arithmetik- und Steuerprogramm-Speicherschaltkreises 20 und gemäß dem Inhalt des Bearbeitungsprogramm-Speicherschaltkreises 25 mittels der Adressensignale 14, Datensignale 15 und Steuersignale 16 so durchgeführt, daß die Steuerung der Radialbohrmaschine entsprechend des Bearbeitungsprogramms erfolgen kann. Der arithmetik- und Steuerschaltkreis 10 wird gleichzeitig mit arithmetischen Aufgaben für die Koordinatentransformation versorgt.

Aufgrund der Forderung des Prüf- und Überwachungsschaltkreises 13, des Meßsystem-Verarbeitungsschaltkreises 40, des Maschinenzustands-Eingangsschaltkreises 50, des Taktgeberschaltkreises 12, des Bearbeitungsprogramm-Eingangsschaltkreises 60 und des Tastatur-Verarbeitungsschaltkreises 30 wird der Unterbrechungs-Verarbeitungsschaltkreis 11 mittels der Unterbrechungsforderungssignale 17 ausgewertet, nach der Aufzählung in Prioritätsfolge geordnet und zur Entscheidung in den Arithmetik- und Steuerschaltkreis 10 weitergeführt.

Durch den Taktgeber-Schaltkreis 12 werden mittels der Zeitsignale 18 die einzelnen Schaltkreisfunktionen abgestimmt bzw. die durch den Unterbrechungs-Auswertungsschaltkreis 11 geführten Unterbrechungsforderungssignale 17 von Zeit zu Zeit in den Arithmetik- und Steuerschaltkreis gegeben.

Die Funktionsfähigkeit der einzelnen Schaltkreise wird durch den Prüf- und Überwachungsschaltkreis 13 mittels der Prüfsignale 19 durchgeführt und im Fehlerfall wird der Arithmetik- und Steuerschaltkreis 10 mit dem Unterbrechungsforderungs-Signal 17 über den Unterbrechungs-Auswertungsschaltkreis 11 berichtet.

Der Arithmetik- und Steuerprogramm-Speicherschaltkreis 20 enthält die Algorithmen und Daten, mit denen die Funktionen und Verbindungen der einzelnen Schaltkreise, sowie die Verbindung mit der Radialbohrmaschine, den Peripherien und dem Bedienungspersonal über den Arithmetik- und Steuerschaltkreis 10 gesteuert bzw. für Transformations-Aufgaben umgewandelt und ausgeführt werden. Der Schaltkreis 20 wird zweckmäßigerweise aus nichtlöschbaren Speicherbausteinen aufgebaut.

Der Bearbeitungsprogramm-Speicherschaltkreis 25 enthält die Arbeitsdaten für die Radialbohrmaschine, und wird vom Bearbeitungsprogramm bestimmt (Bohrungsmittelpunkte, Toleranzen, Vorschub- und Drehzahlwerte, und entsprechende Funktionen, wie Lösen—Klemmen, Kühlmittel Ein- und Ausschalten, Drehzahl- und Werkzeugwechsel usw.). Der Schaltkreis wird zweckmäßig aus Schreib-Lese-Speicherbausteinen niedriger Stromaufnahme aufgebaut, die ihren Inhalt für längere Zeit behalten.

Der Tastatur-Verarbeitungsschaltkreis 30 ermöglicht über Tastatur-Verarbeitungssignale 31 durch Tastatur 32 die Handeingabe und Änderung der Bearbeitungsprogramme und im allgemeinen den Eingriff des Bedienungspersonals.

Der Anzeige-Verarbeitungsschaltkreis 35 ermöglicht über die Anzeige-Verarbeitungssignale 36 auf der Anzeige 37 Informationen über das Bearbeitungsprogramm, aktuelle Bohrmaschinen-Position und allgemeine Informationen für das Bedienungspersonal zu liefern.

Aufgrund der Impulsgeber-Signale 41, sowie der Maschinenreferenzpunkt-Signale 43, werden die Verfahrwege der Radialbohrmaschine vom Impulsgeber 42 gemessen und die Inkremente zwischen zwei Abfragen des Meßsystem-Verarbeitungsschaltkreises 40 erfaßt und zum Berechnen der aktuellen Position des Bohrspindelpunktes P bzw. der Werte Rp und Ap an den Arithmetik- und Steuerschaltkreis 10 weitergeführt. Die berechneten aktuellen Positionswerte werden bei jedem Referenzpunkt-Durchgang auf Richtigkeit geprüft, und im Falle einer Abweichung wird eine Fehlermeldung angezeigt und dadurch Ausschußbildung vermieden.

Der Meßsystem-Verarbeitungsschaltkreis 40 ist geeignet, außer zur Messung der Koordinaten A und R auch zu den Messungen weiterer Verfahrwege, z.B. für die Messungen von senkrechten Bewegungen der Bohrspindel oder des Auslegers, vorausgesetzt, daß diese mit Impulsgebern und Referenzpunktschaltern ausgerüstet sind.

Der Analog-Servo-Ausgangsschaltkreis 45 regelt durch Analog-Servo-Ausgangssignale 46 die Steuerung der Servoantriebe für die Bewegung und nach Anspruch den regelbaren Hauptantrieb für die Bohrspindeldrehzahl.

Der Maschinenzustands-Eingangsschaltkreis 50 verarbeitet die Maschinenzustands-Eingangssignale 51 von Endschaltern, Druckschaltern, Fühlern, usw. und führt zum Arithmetik- und Steuerschaltkreis 10 weiter. Während des Ablaufs des Bearbeitungsprogramms werden diese Signale beim Steuern der Radialbohrmaschine berücksichtigt.

Der Maschinenzustands-Ausgangsschaltkreis 55 steuert aufgrund der Befehle des Arithmetik- und Steuerschaltkreises 10 über Maschinenzustands-Ausgangssignale die verschiedenen Maschinenfunktionen (z.B.: Lösen—Klemmen, Kühlmittel, Werkzeugwechsel, Vorschun, Stufenwechsel, usw.) und treibt die Bedienungspult-Anzeigelampe an.

Durch den Bearbeitungsprogramm-Eingabeschaltkreis 60 word das Bearbeitungsprogramm von einer Peripherie (Kassettenrecorer, Lochstreifenleser, usw.) über die Bearbeitungsprogramm-Eingabesignale 61—angesteuert von dem Arithmetik- und Steuerschaltkreis 10—in den Bearbeitungsprogramm-Speicherschaltkreis 25 gegeben. Während der Eingabe werden die Daten ständig auf Richtigkeit überprüft.

Der Bearbeitungsprogramm-Ausgabeschaltkreis 65—angesteuert von dem Arithmetik- und Steuerschaltkreis 10—gibt das Bearbeitungsprogramm aus dem Programm-Speicherschaltkreis 25 durch die Bearbeitungsprogramm-Ausgabesignale 66 an eine Datenaufzeichner-Peripherie (Kassettenrecorder, Lochstreifenstanzer, usw.) bzw. mittels eines Zeilendruckers wird von dem Bearbeitungsprogramm eine Liste gefertigt.

Die Ausbau-Erweiterungen der Positionssteuerung können zweckmäßig in drei Stufen eingereiht werden. Sämtliche Versionen enthalten—zwar in unterschiedlichen Ausbaustufen—die folgenden Schaltkreise:

Arithmetik- und Steuerschaltkreis 10, Arithmetik- und Steuerprogramm-Speicherschaltkreis 20, Bearbeitungsprogramm-Speicherschaltkreis 25, Meßsystem-Verarbeitungsschaltkreis 40, Maschinenzustands-Verarbeitungsschaltkreis 50 und den Maschinenzustands-Ausgangsschaltkreis 55. Die einfachste Version ist nur geeignet für Anlernprogramme und für deren Rückgabe, mit Verwendung von wenigen Druckknöpfen und Anzeigelampen-Bedienungselementen. Die mittlere Ausbaustufe ermöglicht die Handeingabe und Anzeige der Bearbeitungsprogramme bzw. der Bearbeitungszustände mit Hilfe des Tastatur-Verarbeitungsschaltkreises 30, Tastatur 32 bzw. mit Verwendung des Anzeige-Verarbeitungsschaltkreises 35 und der Anzeige 37. Weiterhin wird ermöglicht, Programme von Magnetkassetten und von anderen Datenträgern durch den Bearbeitungsprogramm-Eingabeschaltkreis 60 einzugeben bzw. durch Verwendung des Bearbeitungsprogramm-Ausgabeschaltkreises 65 auf Magnetkassetten oder auf andere Datenträger auszugeben bzw. eine Liste auf einem Zeildrucker anzugertigen. Mit der einfachsten und der mittleren Ausbaustufe können konventionelle Radialbohrmaschinen ohne erhebliche Änderungen auch nachträglich ausgerüstet werden; das Positionieren erfolgt manuell.

Bei der dritten voll ausgebauten Version erfolgt das Positionieren mit regelbaren Servoantrieben über den Analog-Servo-Ausgangsschaltkreis 45, wobei das Funktionieren der Radialbohrmaschine größten Teils automatisiert ist (Lösen—Klemmen, Vorschub, Hauptspindel-Stufenwechsel, Werkzeugwechseln, Kühlmittel usw.). Diese Ausbaustufe beansprucht aber eine speziell für diesen Zweck ausgestaltete Radialbohrmaschine.

Grundlegende Aufgabe der Positioniersteuerung, die an eine Radialbohrmaschine angeschlossen ist, ist das Messen der Position der Bohrspindel 1 bzw. deren Mittelpunkt P und auf Grund der Messung einen Vergleich zwischen den im Bearbeitungsprogramm im kartesischen Koordinatensystem angegebenen Positionen der Bohrungsmittelpunkte 5 und dem Polarkoordinatensystem der Radialbohrmaschine mit Hilfe einer geeigneten Transformation durchzuführen. Beim Programm-Anlernen werden aus den an einer Mustervorlage, wie einem naturgetreuen Werkstückmodell, einer die Bohrungsmittelpunkte enthaltenden Schablone oder Zeichnung, gemessenen Koordinaten R und A der Bohrungsmittelpunkte in Abhängigkeit von den hierbei vorgegebenen einprogrammierten Parametern $R_0$, $A_0$ und $A_x$ des x,.y-Koordinatensystems der Mustervorlage die Bohrungskoordinaten X und Y aufgrund der Beziehungen /1/, /2/, /3/, /4/, /5/, und /6/ berechnet und für die spätere Werkstückbearbeitung gespeichert, und bei der Programm-Rückgabe werden umgekehrt aus den programmierten Werten X und Y die entsprechenden Zielkoordinaten R und A mit den Beziehungen /7/, /8/, /9/, /10/, /11/ und /12/ berechnet.

Die Beziehung der beiden Koordinatensystem zueinander werden durch die Parameter $R_0$, $A_0$ und $A_x$ bestimmt, wobei durch Aufnahme bzw. Abgabe der Koordinatensystem-Bestimmungspunkte $K_1$ und $K_2$ durch die Steuerung die zusammengehörigen Werte $R_1$, $A_1$ und $X_1$, $Y_1$ bzw. $R_2$, $A_2$ und $X_2$, $Y_2$ mit den Beziehungen /13/, /14/, /15/, /16/ und /17/ ermittelt werden und mit den Beziehungen /18/ und /19/ auf Richtigkeit geprüft werden können.

Das Bearbeitungsprogramm ist in Arbeitsreihenfolge und in kartesischen (Werkstück)-Koordinaten geschrieben und enthält die Bohrungsmittelpunkte und Toleranzen der zu bearbeitenden Bohrungen (im Falle einer erweiterten Ausbaustufe enthält es auch die Bohrtiefe, Vorschubwerte, Drehzahlwerte, Maschinenfunktions-Befehle, usw.). Die Eingabe kann durch Anlernen, Handeingabe und aus einem externen Datenträger erfolgen. Das Programm selbst ist unabhängig vom Koordinatensystem der Radialbohrmaschine und so kann das Werkstück 4 in beliebiger Position auf die Grundplatte 6 gespannt werden.

Die Änderung des Programms, wie Eingeben und Löschen einzelner Punkte oder Löschen kompletter Programme ist möglich. Das Programmspeichern erfolgt mit Prüfdaten und ermöglicht dadurch das Erkennen bzw. Verbessern fehlerhafter Programme.

Wenn für alle Werkstücke und Mustervorlagen die X, Y-Koordinaten der Bezugspunkte $K_1$, $K_2$ zur

Bestimmung der Parameter $R_0$, $A_0$, $A_x$ stets gleich bleiben, können sie z.B. im Speicher 20 fest einprogrammiert sein.

**Patentansprüche**

1. Verfahren zum Positionssteuern der Bohrspindelachse (P) einer Radialbohrmaschine, bei welche die Bohrspindel (1) auf einem Bohrschlitten (2) angeordnet ist, der auf einem Ausleger (3), welcher um eine vertikale Schwenkachse (K) schwenkbar ist, entlang einer die Schwenkachse (K) schneidenden Verstellgeraden ($r_k$) verfahrbar ist, so daß die Bohrspindelachse (P) parallel zur Verstellgeraden ($r_k$) in einem für die Maschine spezifischen Abstand ($K_p$) verfahren wird, wobei die Positionssteuerung in Abhängigkeit von in einem werkstückbezogenen kartesischen X,Y-Koordinatensystem vorgegebene, x,y-Sollkoordinaten der Mittelpunkte der im Werstück (4) auszubildenden Bohrungen (5) erfolgt, dadurch gekennzeichnet, daß die im X,Y-Koordinatensystem vorgegebenen Sollkoordinaten der Bohrungen in Polarkoordinaten eines maschinenfesten Polarkoordinatensystems mit der Spur der Schwenkachse (K) des Auslegers (3) als Pol umgerechnet werden, daß als Istwerte der Koordinaten der Bohrspindelachse (P) die Polarkoordinaten der durch den spezifischen Abstand ($K_p$) festgelegten Orthogonalprojektion ($P_k$) der Bohrspindelachse (P), auf die Verstellgerade ($r_k$) gemessen werden, und daß die Ist-Position und Ist-Ausrichtung des Werkstückes (4) im maschinenbezogenen Polarkoordinatensystem dadurch vorbestimmt werden, daß die Bohrspindelachse (P) nacheinander an zwei auf den Werkstück (4) im Abstand voneinander liegende Meßpunkte ($K_1$, $K_2$) verfahren wird, deren x,y-Koordinaten in dem werkstückbezogenen X,Y-Koordinatensystem vorgegeben sind, und die Polarkoordinaten dieser Meßpunkte ($K_1$, $K_2$) in dem maschinenfesten Polarkoordinatensystem über die Orthogonalprojektion ($P_k$) der Bohrspindelachse (P) auf die Verstellgerade ($r_k$) und deren Winkelkoordinate (A) gemessen werden, wonach die Arbeitspositionen der Bohrspindelachse (P) in Abhängigkeit von der gemessenen Ist-Position und Ist-Ausrichtung des Werkstückes (4) und den vorgegebenen x,y-Positionskoordinaten der Bohrungsmittelpunkte angesteuert werden.

2. Verfahren nach Anspruch 1, dadurch gekennzeichnet, daß die anzusteuernden Arbeitspositionen der Bohrspindelachse (P) durch Verfahren der Bohrspindelachse (P) auf die auf einer Mustervorlage vorgegebenen Bohrungsmittelpunkte und Messen von deren Polarkoordinaten (R, A) im maschinenbezogenen Polarkoordinatensystem und transformieren der gemessenen Werte in werkstückbezogene x,y-Koordinaten in Abhängigkeit von der Ist-Position und Ist-Ausrichtung der Mustervorlage in dem Polarkoordinatensystem vorgespeichert werden.

3. Schaltungsanordnung zur Positionssteuerung einer Radialbohrmaschine, deren Bohrspindel (1) auf einem Bohrschlitten (2) angeordnet ist, der auf einem Ausleger (3), welcher um eine vertikale Schwenkachse (K) schwenkbar ist, entlang einer die Schwenkachse (K) schneidenden Verstellgeraden ($r_k$) verfahrbar ist, zur Durchführung des Verfahrens nach Anspruch 1, dadurch gekennzeichnet, daß die Positionen der Bohrspindelachse (P) mittels eines Rechners (10, 20) rechnergesteuert sind, durch welchen in einen Bearbeitungsprogramm-Speicherschaltkreis (25) eingelesene, x,y-Koordinatendante der in dem Werkstück (4) auszubildenden Bohrungen (5) in einem werkstückbezogenen kartesischen X,Y-Koordinatensystem in zugeordnete, auf ein maschinenbezogenes Polarkoordinatensystem, dessen Pol (R=0) die Schwenkachse (K) des Auslegers (3) und dessen Polarachse (A=0) eine die Schwenkachse (K) senkrecht schneidende Bezugsgerade ist, bezogenen Polarkoordinatendaten (R, A) der Orthogonalprojektion der Bohrspindelachse (P) auf die Verstellgerade ($r_k$) umrechenbar sind und welcher über eine die jeweiligen Polarkoordinatendaten (R, A) der Orthogonalprojektion der Bohrspindelachse (P) auf die Verstellgerade ($r_k$) messende Meßschaltung (40, 42) auf die Ist-Position und Ist-Ausrichtung des eingespannten Werkstücks (4) im maschinenbezogenen Polarkoordinatensystem aus den Meßwerten der zwei unterschiedlichen Meßpunkten ($K_1$, $K_2$) auf dem eingespannten Werkstück (4) zugeordneten Position der jeweils zu den Meßpunkten ($K_1$, $K_2$) hin verfahrenen Bohrspindelachse (P) und den vorgegebenen x,y-Koordinatendaten dieser beiden Meßpunkte programmierbar ist.

4. Schaltungsanordnung nach Anspruch 3, dadurch gekennzeichnet, daß der Rechner (10, 20), die Meßschaltung (40, 42) und der Bearbeitungsprogramm-Speicherschaltkreis (25) in derartiger gegenseitiger Schaltverknüpfung stehen, daß über die Meßschaltung (40, 42) auf einer Mustervorlage gemessene Polarkoordinatendaten in Kenntnis der Ist-Position und Ist-Ausrichtung der Mustervorlage im maschinenbezogenen Polarkoordinatensystem in werkstückbezogene kartesische x,y-Koordinatendaten umrechenbar sind und diese in den Bearbeitungsprogramm-Speicherschaltkreis (25) für die Umrechnung in die maschinenbezogenen Polarkoordinatendaten für die anzusteuernden Arbeitspositionen der Bohrspindelachse (P) einlesbar sind.

**Revendications**

1. Procédé de commande pour le positionnement de l'axe de broche (P) d'une perceuse radiale dans laquelle la broche (1) est disposée sur un chariot de perçage (2) déplaçable sur une potence (3) montée à pivotement autour d'un axe de pivotement vertical (K), coupant une droite de translation ($r_k$) le long de laquelle s'effectue le déplacement dudit chariot, de telle sorte que l'axe de broche (P) soit déplacé parallèlement à la droite de translation ($r_k$) à une distance d'espacement ($K_p$) spécifique pour la machine, la commande de positionnement étant effectuée en fonction de coordonnées de consigne x, y, prédéterminés dans un système imposé de coordonnées cartésiennes X,Y rapporté à la pièce et définissant les centres des perçages (5) à pratiquer dans la pièce (4), caractérisé en ce qu'on convertit les coordonnées de consigne, prédéterminés dans le système de coordonnées X,Y des perçages, en coordonnées polaires d'un système de coordonnées polaires affecté à la mchine et utilisant la trace de l'axe de pivotement (K) de la potence (3) comme pôle, en ce qu'on mesure, comme valeurs réelles des coordonnées de l'axe de broche (P), les coordonnées polaires de la projection orthogonale ($P_k$) de l'axe de broche (P), telle que définie par l'espacement spécifique ($K_p$), sur la droite de translation ($r_k$) et en ce qu'on prédétermine la position réelle et l'orientation réelle de la pièce (4) dans le système de coordonnées polaires associé à la machine en faisant en sorte que l'axe de broche (P) soit déplacé successivement vers deux points de mesure ($K_1$, $K_2$) espacés l'un de l'autre sur la pièce (4), points dont les coordonnées x,y sont prédéterminés dans le système de coordonnées X,Y associé à la pièce, et en ce qu'on mesure les coordonnées polaires de ces points de mesure ($K_1$, $K_2$) dans le système de coordonnées polaires associé à la machine par l'intermédiaire de la projection orthogonale ($P_k$) de l'axe de broche (P) sur la droite de translation ($r_k$) et par ces coordonnées angulaires (A), après quoi on établit les positions de travail de l'axe de broche (P) sont commandées en fonction de la position réelle mesurée et de l'orientation réelle mesurée de la pièce (4) et en fonction des coordonnées de position x,y prédéterminés des centres des perçages.

2. Procédé selon la revendication 1, caractérisé en ce qu'on mémorise au préalable les positions de travail à établir pour l'axe de broche de perçage (P) par déplacement de l'axe de broche de perçage (P) jusqu'aux centre des perçages prédéterminés sur un gabarit, et par mesure de leurs coordonnées polaires (R, A) dans le système de coordonnées polaires associé à la machine, puis par transformation des valeurs mesurées en coordonnées x,y associés à la pièce en fonction de la position réelle et de l'orientation réelle du gabarit dans le système de coordonnées polaires.

3. Circuit de commande de positionnement pour une perceuse radiale dont la broche de perçage (1) est disposée sur un chariot de perçage (2), qui est déplaçable sur une potence (3), pouvant pivoter autour d'un axe vertical (K), le déplacement dudit chariot s'effectuant le long d'une droite de translation ($r_k$) coupant l'axe de pivotement (K), en vue de la mise en oeuvre du procédé selon la revendication 1, caractérisé en ce que les positions de l'axe de broche de perçage (P) sont établies par calcul à l'aide d'un calculateur (10, 20) au moyen duquel des valeurs de coordonnées x,y, correspondant aux perçages (5) à realiser dans la pièce (4) et lues dans un circuit de commande de mémoire de programme d'usinage (25), en correspondance à un système de coordonnées cartésiennes X,Y associé à la pièce, sont convertibles en valeurs de coordonnées polaires (R, A) rapportés à un système de coordonnées polaire associé à la machine et dont le pôle (R=0) est l'axe de pivotement (K) de la potence (3) tandis que son axe polaire (A=0) est une droite de référence coupant perpendiculairement l'axe de pivotement (K), en relation avec la projection orthogonale de l'axe de broche de perçage (P) sur la droite de translation ($r_k$), et qui est programmable, par l'intermédiaire d'un circuit de mesure (40, 42) effectuant la mesure des valeurs correspondantes de coordonnées polaires (R, A) de la projection orthogonale de l'axe de broche de perçage (P) sur la droite de translation ($r_k$), en correspondance à la position réelle et à l'orientation réelle de la pièce (4) fixée sur le chariot, dans un système de coordonnées polaire associé à la machine, à partir des valeurs de mesure de la position, associée à deux points de mesure différents ($K_1$, $K_2$) sur la pièce (4), de l'axe de broche de perçage (P) qui a été amené dans les points de mesure respectifs ($K_1$, $K_2$) et des valeurs prédéterminées de coordonnées x,y de ces deux points de mesure.

4. Circuit selon la revendication 3, caractérisé en ce que le calculateur (10, 20), le circuit de mesure (40, 42) et le circuit de commande de mémoire de programme d'usinage (25) coopèrent l'un avec l'autre de telle sorte que les valeurs de coordonnées polaires, mesurées par l'intermédiaire du circuit de mesure (40, 42) sur un gabarit puissent être converties par le calcul, compte tenu de la position réelle et de l'orientation réelle du gabarit dans un système de coordonnées polaires associé à la machine, en valeurs de coordonnées cartésiennes x,y associés à la pièce et que celles-ci puissent être lues dans le circuit de commande de mémoire de programme d'usinage (25) en vue d'une conversion en valeurs de coordonnées polaires associés à la machine pour définir les positions de travail de l'axe de broche de perçage (P) à commander.

**Claims**

1. A process for controlling the position of the drilling spindle axis (P) of a radial drilling machine, wherein the drilling spindle (1) is arranged on a drilling saddle (2) which is displaceable on a side arm (3) pivotable about a vertical pivot axis (K), the displacement being along an adjustment line ($r_k$) intersecting the pivot axis (K), so that the drilling spindle axis (P) is travelling parallel to the adjustment line ($r_k$) at a spacing ($K_p$) specific to the machine, wherein the position control depends on preset desired x, y coordinates of a workpiece-related Cartesian coordinate system X, Y of the centre-points of the bore holes (5) to be formed in the workpiece (4), characterised in that the desired coordinates of the bores preset in the X, Y coordinate system are transformed into polar coordinates of a polar coordinate system related to the machine, with the trace of the pivot axis (K) of the arm (3) serving as the pole; in that as the actual values of the coordinates of the drilling spindle axis (P) the polar coordinates of the orthogonal projection ($P_k$) of the drilling spindle axis (P) on the adjustment line ($r_k$), determined *via* the specific spacing ($K_p$), are measured;

and that the actual position and the actual orientation of the workpiece (4) are predetermined in the machine-related polar coordinate system in such a way that the drilling spindle axis (P) is sequentially moved into two mutually spaced apart measuring points ($K_1$, $K_2$) disposed on the workpiece (4), the x, y coordinates of the measuring points ($K_1$, $K_2$) being predetermined in the workpiece-related X, Y coordinate system, and the polar coordinates of these measuring points ($K_1$, $K_2$) in the machine-related polar coordinate system are measured *via* the orthogonal projection ($P_k$) of the drilling spindle axis (P) in the adjustment line ($r_k$) and the angular coordinates (A) of the latter, whereafter the working positions of the drilling spindle shaft (P) are controlled in dependence on the measured actual position and orientation of the workpiece (4) and the predetermined x, y position coordinates of the centre points of the bores.

2. A process according to claim 1, characterised in that the working positions of the drilling spindle axis (P) to be controlled are pre-stored in the polar coordinate system by moving the drilling spindle axis (P) to the centre points of the bores preset in a master pattern and by measuring its polar coordinates (R, A) in the machine-related polar coordinate system and by transforming the measured values into workpiece-related x, y coordinates in dependence on the actual position and orientation of the pattern.

3. Circuit arrangement for controlling the position of a radial drilling machine the drilling spindle (1) of which is arranged on a drilling saddle (2) displaceable along an adjustment line ($r_k$) the said line intersecting with the pivot axis (K), for carrying out the process according to claim 1, characterised in that the positioning of the drilling spindle axis (P) is controlled by a computer (10, 20) by means of which the x, y coordinate data read into a processing program storing circuit (25) of the computer (10, 20) relating to the bore holes (5) to be drilled into the workpiece (4) in a workpiece-related Cartesian X, Y, coordinate system are converted into related polar coordinates (R, A) of the orthogonal projection of the drilling spindle axis (P) in the adjustment line ($r_k$) of a machine-related polar coordinate system, the pole (R=0) of which is the swivel axis (K) of the arm (3) and the polar axis (A=0) of which is a reference line perpendicularly intersecting the swivel axis (K), and which computer is programmable by means of a measuring circuit (40, 42) for measuring the respective polar coordinates (R, A) of the orthogonal projection of the drilling spindle axis (P) on the adjustment line ($r_k$) to the actual position and actual orientation of the clamped workpiece (4) in the machine-related polar coordinate system from the measurement values of those positions of the drilling spindle axis (P) which are connected with two different measuring-points ($K_1$, $K_2$) on the clamped workpiece (4) to which the drilling spindle axis is sequentially moved, and from the data of the predetermined x, y coordinates of the two measuring points ($K_1$, $K_2$).

4. Circuit arrangement according to claim 3, characterised in that the computer (10, 20), the measuring circuit (40, 42) and the processing program storing circuit (25) are interconnected in a combined switching circuit in such a way, that the polar coordinates measured by use of the measuring circuit (40, 42) on a master pattern are convertible in the knowledge of the actual position and actual orientation of the pattern in the machine-related polar coordinate system into workpiece-related Cartesian x, y coordinates, and these can be read into the processing program-storing circuit (25) for the conversion into machine-related polar coordinates for the working positions of the drilling spindle axis (P).

Fig. 1a

Fig. 1b

Fig. 3

Fig. 2

Fig. 4